**Europäisches Patentamt**

**European Patent Office**

**Office européen des brevets**

(19)

(11) Veröffentlichungsnummer : **0 328 070 B1**

# EUROPÄISCHE PATENTSCHRIFT

(12)

(45) Veröffentlichungstag der Patentschrift :
**15.01.92 Patentblatt 92/03**

(51) Int. Cl.$^5$ : **B05B 5/08**, B05B 15/12

(21) Anmeldenummer : **89102154.5**

(22) Anmeldetag : **08.02.89**

(54) **Anlage zur elektrostatischen Pulverbeschichtung mit einem Kabinenraum zur Aufnahme des Beschichtungsguts.**

(30) Priorität : **01.03.88 DE 3806547**
**08.02.88 DE 3803742**

(43) Veröffentlichungstag der Anmeldung :
**16.08.89 Patentblatt 89/33**

(45) Bekanntmachung des Hinweises auf die
Patenterteilung :
**15.01.92 Patentblatt 92/03**

(84) Benannte Vertragsstaaten :
**AT CH DE ES FR GB IT LI SE**

(56) Entgegenhaltungen :
**DE-A- 2 930 080**
**DE-A- 3 043 784**

(56) Entgegenhaltungen :
**DE-A- 3 118 827**
**DE-A- 3 229 717**
**DE-C- 2 430 517**
**US-A- 3 744 450**
**US-A- 4 323 030**

(73) Patentinhaber : **Krämer, Erich**
**Hüllreuthstrasse 18**
**W-8626 Michelau (DE)**

(72) Erfinder : **Krämer, Erich**
**Hüllreuthstrasse 18**
**W-8626 Michelau (DE)**

(74) Vertreter : **Leyh, Hans, Dr.-Ing.**
**Patentanwälte Berendt, Leyh & Hering Innere**
**Wiener Strasse 20**
**W-8000 München 80 (DE)**

## Beschreibung

Die Erfindung betrifft eine Anlage zur elektrostatischen Pulverbeschichtung mit einem Kabinenraum zur Aufnahme des Beschichtungsgutes, in der wenigstens eine elektrostatische Sprüheinrichtung für den Pulverauftrag vorgesehen ist, mit einer Filtereinrichtung zur Pulverrückgewinnung, die antreibbare, endlose Filterbänder aufweist, die den Kabinenraum nach innen begrenzende Wände bilden und die mittels Saugwirkung gereinigt werden, und mit einem Pulversammelbehälter für das rückgewonnene Pulver.

Aus der US-A-4323030 ist eine derartige Kabine zum Beschichten von Gegenständen mit einem pulverförmigen Material bekannt. Bei einem Wechsel der Farbe des Beschichtungsmaterials muß das vorherige Material aus der Kabine entfernt werden. Hierzu sind die Innenwände, die Decke und der Boden der Kabine aus endlosen, beweglichen Bändern gebildet, die durch Bürsten, Anblasen oder Absaugen gereinigt werden können.

Eine Reinigung und Entfernung der Pulverpartikel von den Innenwandflächen der Kabinenwände ist jedoch nicht vorgesehen.

Der Erfindung liegt die Aufgabe zugrunde, eine Anlage zur elektrostatischen Pulverbeschichtung der eingangs genannten Art so weiterzubilden, daß sie mit einer geringen Pulverumlaufmenge im Gesamtbetrieb der Anlage auskommt und einen schnellen Farbwechsel bei möglichst geringem Pulververlust ermöglicht.

Nach der Erfindung wird dies dadurch erreicht, daß das oder die Filterbänder in einem Luftkasten umlaufen, der die Kabinenaußenwand bildet und in dem Saugdruck herrscht, daß ein Zwischenraum zwischen den Innenwandflächen des Luftkastens und dem Außentrum des Filterbandes vorgesehen ist, in dem eine Blaseinrichtung zum Entfernen der an den Innenwandflächen des Luftkastens haftengebliebenen Pulverpartikel umläuft, und daß in einer unterdruckfreien Zone eine von einer Abblaswalze gebildete Abblaseinrichtung angeordnet ist, welche von der Filterbandinnenseite her die auf der Filterbandaußenseite haftenden Pulverpartikel entfernt.

Bei der erfindungsgemäßen Anlage zur elektrostatischen Pulverbeschichtung ist demnach eine Filtereinrichtung vorgesehen, die über den gesamten Kabinenraum hinweg wirksam ist und die kontinuierlich auch während des Arbeitens der Anlage betrieben werden kann. Hierdurch kann die Umlaufmenge des Pulvers reduziert werden, indem die beim Beschichten unvermeidbar auftretende überschüssige Pulvermenge kontinuierlich mit Hilfe der Filtereinrichtung aus dem Kabinenraum abgezogen und über eine Pulverrückgewinnungseinrichtung wiederum der Pulverversorgung für die elektrostatische Sprüheinrichtung zugeführt werden kann. Die Farbwechselzeiten lassen sich hierbei drastisch reduzieren, da lediglich gegebenenfalls noch die geringfügigen an den Begrenzungswänden hinter der Filtereinrichtung abgelagerten Pulverteilchen entfernt werden müssen. Aufgrund der sehr kurzen Farbwechselzeiten eignet sich daher die erfindungsgemäße Anlage zur elektrostatischen Pulverbeschichtung auch für die Beschichtung kleiner Losgrößen und insbesondere ist auch ein häufiger Farbwechsel wirtschaftlich vertretbar, da der Pulververlust insgesamt minimal gehalten werden kann. Wenn die Anlage nach der Erfindung so ausgelegt ist, daß der Kabinenraum in Längsrichtung der Anlage in mehrere Teile unterteilt ist, so ergibt sich einerseits der Vorteil, daß man in den jeweiligen Teilen unterschiedliche Farben verarbeiten kann. Auch bei einer zweifarbigen Beschichtung des zu beschichtenden Guts können diese bei einer solchen Unterteilung Pulver in Pulver aufgebracht werden. In wirtschaftlicher Hinsicht bringt eine solche Auslegung der Anlage noch den weiteren Vorteil mit sich, daß wenigstens ein Teil der Anlage weiterbetreibbar ist und zur Pulverbeschichtung benutzt werden kann, während der andere Teil beispielsweise gereinigt wird, um beispielsweise im nächsten Schritt einen Farbwechsel vorzunehmen. Auch lassen sich hitzeempfindliche Farbtöne auf vereinfachte Weise verarbeiten. Hierdurch kann das immer wachsende Bedürfnis auf dem Gebiet der Pulverbeschichtungstechnik nach einer immer größer werdenden Vielfältigkeit der Farbwahl erfüllt werden.

Gemäß der Erfindung ist eine Abblaseinrichtung in einer unterdruckfreien Zone angeordnet, die von der Filterbandinnenseite her die auf der Filterbandaußenseite haftenden Pulverpartikel entfernt.

Mit Hilfe dieser Abblaseinrichtung, die bei einem umlaufenden Filter als Abblaswalze ausgebildet ist, und zweckmäßigerweise etwa in der Längsmitte der Bodenfläche der Kabine angeordnet ist, kann das an dem Filterband haften gebliebene Pulver direkt zu einem entsprechenden Pulversammelbehälter befördert werden, um das Pulver wiederum zurückzugewinnen, ohne daß es hierzu einer Zyklonabscheideeinrichtung bedarf. Daher lassen sich auch strenge Luftreinheitsvorschriften ohne Schwierigkeiten einhalten und kostenintensive Rückgewinnungseinrichtungen, die bisher erforderlich waren, können entfallen. Ferner kann durch diese bei der Erfindung vorgesehene direkte Rückgewinnung des Pulvers auch die insgesamt im System umlaufende Pulvermenge beträchtlich reduziert werden, da die Leitungen von und zu den Zyklonen einer nachgeschalteten Rückgewinnungseinrichtung sowie von eventuell nachgeschalteten zusätzlichen Nachfiltern entfallen und somit die von Pulver durchströmten Leitungswege weitgehend kurz gewählt werden können.

Vorzugsweise ist der Abblaseinrichtung gegenüberliegend der Pulversammelbehälter angeordnet, so daß die Abblaseinrichtung nicht nur das auf dem umlaufenden Filterband der Filtereinrichtung haften gebliebene Pulver entfernt, sondern dies auch zugleich in den Pulversammelbehälter fördert.

Um die Schwierigkeiten im Zusammenhang mit elektrostatisch aufgeladenen Pulverteilchen, die am Filterband der Filtereinrichtung haften, zu vermeiden, ist vorzugsweise in Umlaufrichtung des Filterbands gesehen, vor der Abblaseinrichtung eine elektrostatische Entladeeinrichtung vorgesehen, die von einer Antistatik-Kontaktschleife gebildet werden kann und somit die Pulverteilchen vor dem Wirksamwerden der Abblaseinrichtung entlädt.

Falls bei einer solchen Anlage zur elektrostatischen Pulverbeschichtung noch Pulverpartikel an den Wandflächen des Kabinenraums hinter der Filtereinrichtung haften bleiben, ist bei der erfindungsgemäßen Anlage eine Blaseinrichtung vorgesehen, die vorzugsweise von einer Blasdüse gebildet wird, die in dem Raum zwischen dem Außentrum des Filterbands und der Innenfläche der Außenwand umläuft, so daß das Pulver an diesen Wandflächen ständig entfernt wird und in Richtung zu der Abblaseinrichtung bzw. dem Pulversammelbehälter transportiert wird.

Gemäß einer vorteilhaften Ausgestaltungsform nach der Erfindung wird der Pulversammelbehälter unterhalb der Bodenfläche und der Abblaseinrichtung gegenüberliegend angeordnet, so daß man nur einen zentralen Pulversammelbehälter für die gesamte Anlage benötigt, aus dem dann die elektrostatische Sprüheinrichtung für den Pulverauftrag gespeist werden kann. Hierdurch kann das für die Beschichtung erforderliche Pulver auf möglichst kurzen Transportwegen geführt werden, so daß die insgesamt umlaufende Pulvermenge reduziert werden kann und dank der kontinuierlich arbeitenden Pulverrückgewinnungseinrichtung mit Hilfe der Filtereinrichtung ein pulversparender Betrieb der Gesamtanlage durchgeführt werden kann.

Gemäß einer alternativen Ausführungsform einer erfindungsgemäßen Anlage zur elektrostatischen Pulverbeschichtung ist die Auslegung so getroffen worden, daß die an sich sonst üblicherweise vorhandenen Kabinenwände durch die Filtereinrichtung, bestehend aus dem Luftkasten und dem umlaufenden Filterband bzw. Filterbändern, insgesamt ersetzt werden. Bei einer solchen Anlage werden die Kabinenwände, die von der Filtereinrichtung gebildet werden, ständig gereinigt, so daß beim Farbwechsel keine zusätzlichen Arbeiten mehr erforderlich sind. Auch können hierdurch die Anlagenherstellungskosten reduziert werden, da teure Rückgewinnungsanlagen (Zyklone) entfallen.

Ferner sind gemäß bevorzugten Weiterbildungen der Erfindung mehrere Unterteilungen der Filtereinheit in Filterteileinheiten möglich, so daß die Filtereinrichtungen an die jeweils gewünschten Erfordernisse angepaßt werden können. Die Filtereinrichtungen können hierbei beispielsweise in zwei symmetrische Filterteileinheiten oder auch mehrere unterteilt werden. Ferner können die Filtereinrichtungen oder die Filterteileinheiten wiederum unterteilt werden, wobei beispielsweise den Seitenwandflächen oder Rückwand bzw. Bodenwand oder Deckenfläche des Kabinenraums jeweils gesonderte Filterteileinheiten zugeordnet werden und der Bodenfläche eine gemeinsame oder auch eine nochmals unterteilte Filterteileinheit zugeordnet sein kann. In ähnlicher Weise kann auch der Kabinendeckenfläche eine gemeinsame Filterteileinheit oder eine nochmals unterteilte zugeordnet werden oder gegebenenfalls kann es auch sein, daß man im Bereich der Kabinendeckenfläche überhaupt keine Filtereinrichtung benötigt. Ferner sind auch Kombinationen der jeweiligen Filterteileinheiten untereinander verwirklichbar. Hierdurch kann den jeweils vorhandenen geometrischen Verhältnissen einer solchen Anlage Rechnung getragen werden, wobei allen Auslegungsformen der Filtereinrichtung gemeinsam ist, daß sie eine kontinuierliche Reinigung der Kabinenwände zur direkten Rückgewinnung des überschüssigen Pulvers ermöglichen.

Bei einer weiteren zweckmäßigen Ausgestaltungsform der Anlage ist die Filtereinrichtung oder sind die Filterteileinheit(en) verfahrbar an einem gerüstartigen Grundgestell angeordnet. Hierbei können die einsatzförmigen Filtereinrichtungen oder Filterteileinheiten dann zur Feinreinigung (beispielsweise beim Farbwechsel) aus dem Grundgestell herausgefahren werden und sie können dann unabhängig von der Anlage auch gegebenenfalls an einer anderen Stelle abschließend gereinigt werden. Das Grundgestell selbst kann hierbei blasluftfrei in einem gesonderten Schritt gereinigt werden, wobei die Flächen des Grundgestells beispielsweise abgeschabt werden und anschließend eine Feinreinigung mittels Abrollen durchgeführt wird.

Die Erfindung wird nachstehend an einem Beispiel unter Bezugnahme auf die beigefügte Zeichnung näher erläutert.

Darin zeigt :

Fig. 1        eine schematische Querschnittsansicht einer erfindungsgemäßen Anlage zur elektrostatischen Pulverbeschichtung, die als Beispiel eine Durchlaufanlage zeigt,

Fig. 2        eine Seitenansicht derselben mit einer Ausführungsvariante der Anlage zur elektrostatischen Pulverbeschichtung, und

Fig. 3a-3f        schematische Ansichten für bei der Erfindung vorgesehenen Filtereinrichtungsausbildungsformen, die verschiedene Unterteilungsmöglichkeiten der Filtereinrichtung in Filterteileinheiten verdeutlichen.

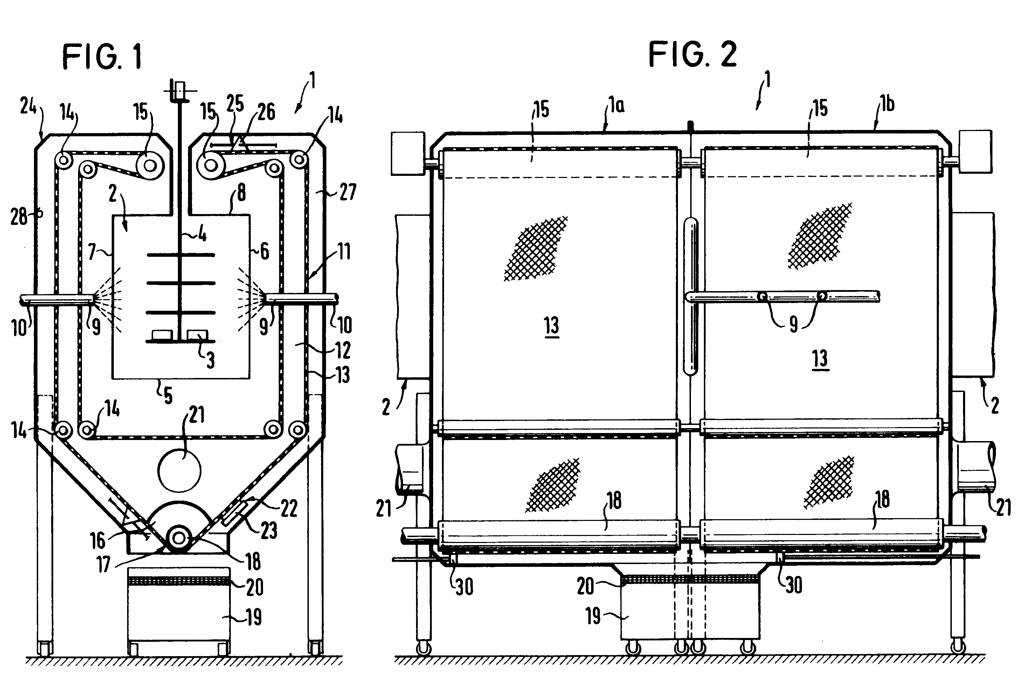

Die in den Fig. 1 und 2 gezeigte Anlage zur elektrostatischen Pulverbeschichtung ist insgesamt mit 1 bezeichnet. Ein Kabinenraum 2, dessen Begrenzungsflächen durch Bandfiltereinrichtungen gegeben sind, dient zur Aufnahme eines Beschichtungsguts 3, das an einem Gehänge 4 durch den Kabinenraum 2 durchgeführt wird. Zur Pulverbeschichtung ragen in den Kabinenraum 2 elektrostatische Sprüheinrichtungen 9, die beispielsweise von Pulversprühpistolen gebildet werden. Die Pulverzuleitungen derselben sind mit 10 bezeichnet. Bei dem dargestellten Beispiel wird der Kabinenraum 2 von einer insgesamt mit 11 bezeichnete Filtereinrichtung (Filterbandrücklauf bzw. -vorlauf). Diese Filtereinrichtung 11 umfaßt im Gebiet mit Unterdruck einen Luftkasten 12 und ein Filterband 13, das endlos ausgebildet ist und über mehrere Umlenkwalzen 14 umläuft, wobei das Filterband 13 durch wenigstens zwei mit 15 bezeichnete angetriebene Walzen bewegt wird. Das dem Kabinenraum 2 zugewandte Innentrum des Filterbands 13 wird mit Pulver aus dem Kabinenraum 2 aufgrund des Unterdrucks im Gebiet aus einem Luftkasten 12 mit Unterdruck beladen und das Pulver haftet auf der Oberfläche des Innentrums des Filterbands 13. Wenn dieses Innentrum des Filterbands 13 aufgrund der Umlaufbewegung weiterbewegt wird, wird der mit Pulver beladene Filterbandteil durch Umlenkung nach außen geführt und bildet dann das äußere Filterbandtrum. In einem V-förmigen Bereich im unteren Teil der Filtereinrichtung 11 ist eine unterdruckfreie Zone 16 vorgesehen, in der als Abblaseinrichtung 17 eine Abblaswalze 18 angeordnet ist. Die Außenfläche dieser Abblaswalze 18 liegt gegen das Außentrum des Filterbands 13 an und bläst von der Innenseite des Filterbands mit Hilfe von Luft die auf der Außenfläche des äußeren Filterbandtrums haften gebliebenen Pulverpartikel weg. Der Abblaseinrichtung 17 gegenüberliegend ist, wie sich dies beispielsweise aus Fig. 2 ergibt, ein Pulversammelbehälter 19 angeordnet, der an seiner Oberseite eine Siebeinrichtung 20 hat. Das durch die Abblaseinrichtung von dem Filterband 13 abgeblasene Pulver wird in Richtung auf die Siebeinrichtung 20 des Pulversammelbehälters 19 geblasen, so daß das mit dem Filterband 13 aufgenommene Pulver unmittelbar in den Pulversammelbehälter 19 gelangt, und somit rückgewonnen wird. Mit diesem Pulversammelbehälter 19 ist die Pulverzuleitung 10 der elektrostatischen Sprüheinrichtung 9 unter Zwischenschaltung einer nicht näher dargestellten Dosierpumpe verbunden. Ein zentrales Absaugrohr 21 steht mit dem Innenraum des vom Luftkasten 12 gebildeten Gebiets mit Unterdruck in Verbindung.

In Umlaufrichtung des Filterbands 13 gesehen ist der Abblaseinrichtung 17 eine elektrostatische Entladeeinrichtung 22 vorgeschaltet, die beispielsweise wie dargestellt von einer Antistatik-Kontaktschleife 23 gebildet wird. Mit Hilfe dieser Entladeeinrichtung 22 wird das auf dem Außentrum des Filterbands 13 haftende Pulver entladen, so daß es ohne Schwierigkeiten durch die nachfolgende Abblaseinrichtung 17 von der Außenfläche des Außentrums des Filterbands 13 entfernt werden kann.

Natürlich kann die Umlaufrichtung des Filterbands 13 auch in umgekehrter Richtung im Vergleich zu dem in den Fig. 1 und 2 dargestellten Beispiel gewählt werden, vorausgesetzt, daß die Abblaseinrichtung 17 und die elektrostatische Entladeeinrichtung 22 so angeordnet werden, daß sie in Pulverabtransportrichtung vorgeschaltet angeordnet sind.

Da bei der in der Fig. 1 gezeigten Anlage auch Pulver an der Innenwandfläche der insgesamt mit 24 bezeichneten Außenwand der Anlage haften bleiben kann, ist eine insgesamt mit 25 bezeichnete Blaseinrichtung vorgesehen, die vorzugsweise von einer Blasdüse 26 gebildet wird, die in dem Zwischenraum 27 zwischen der Innenwandfläche 28 der Außenwand 24 und dem Außentrum des Filterbands 13 umläuft. Hierzu kann die Blasdüse 26 beispielsweise an einem Kettentrieb vorgesehen sein, so daß sie die voranstehend beschriebene Umlaufbewegung ausführen kann. Diese Blaseinrichtung 25 entfernt an der Innenwandfläche 28 haften gebliebene Pulverpartikel und transportiert diese in Richtung der Abblaseinrichtung 17 und zu dem Pulversammelbehälter 19 (zur Reinigung).

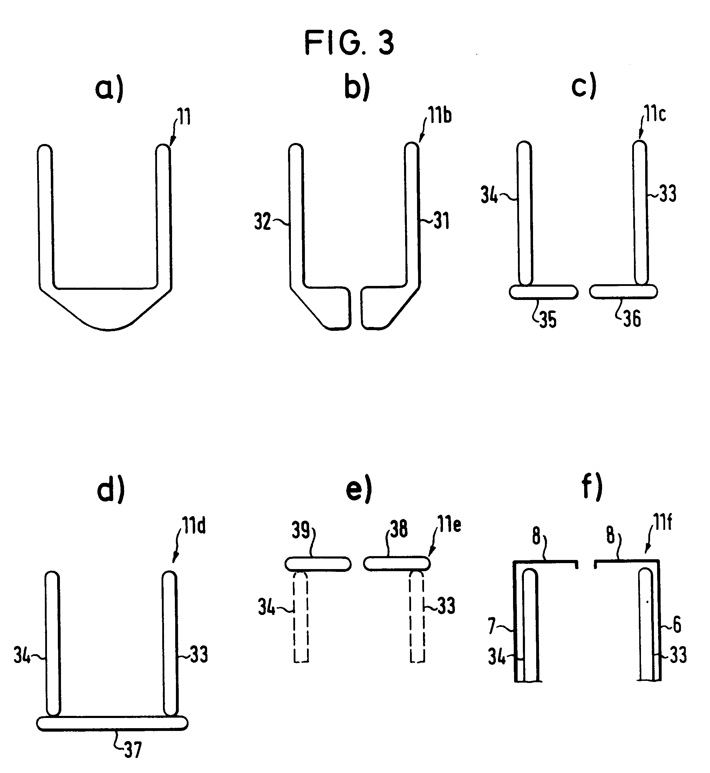

Bei der in Fig. 1 dargestellten Ausführungsform der Anlage 1 zur elektrostatischen Pulverbeschichtung erstreckt sich die Filtereinrichtung 11 über alle Begrenzungsflächen des Kabinenraums 2 und es bleibt nur ein Kanal für den Durchgang des Gehänges 4 an der Oberseite des Kabinenraums 2 frei. Weitere Ausführungsvarianten der Filtereinrichtung 11 werden später anhand den Fig. 3a bis 3f näher erläutert.

Die bei der erfindungsgemäßen Anlage 1 vorgesehene Filtereinrichtung 11 kann kontinuierlich auch während des Betriebs der Anlage 1 arbeiten, so daß ständig das überschüssige Pulver im Kabinenraum 2 abgeführt und mit Hilfe der Filtereinrichtung 11 zu dem Pulversammelbehälter 19 zurückgeführt wird und dort wieder zum weiteren Versprühen verwendet werden kann. Bei dieser nach der Erfindung vorgesehenen Filtereinrichtung 11 werden keine Zyklone zur Pulverrückgewinnung benötigt, da das Pulver von der Filterbandaußenfläche direkt in den Pulversammelbehälter 19 unter Zwischenschaltung der Siebeinrichtung 20 geblasen wird. Die Blaseinrichtung 25 kann ebenfalls gegebenenfalls ständig umlaufen, so daß eine voll automatische Reinigung der Innenwandfläche 28 selbst während des Betriebs der Anlage 1 erreicht wird. Wenn ein Farbwechsel bei einer solchen Anlage 1 erforderlich ist, wird das Filterband 13 der Filtereinrichtung 11 noch so lange längs seiner Umlaufbahn weiterbewegt, bis das gesamte Filterband 13 im Bereich der Abblaseinrichtung 17 frei von Pulverteilchen ist. Die hierfür benötigte Zeit ist relativ kurz, so daß die Anlage 1 nur kurzzeitig für die elektrostatische Pulverbeschichtung nicht genutzt werden kann. Weitere Stillstandszeiten zur Abreinigung von Wänden des Kabinenraums 2 entfallen, so daß schon nach kurzer Zeit die Pulverbeschichtung wieder mit einem neuen Farbton aufgenommen werden kann. Natürlich wird in dieser Zwischenzeit noch der Pulversammelbehälter 19 von der Anlage 1 entfernt und die elektrostatischen Sprüheinrichtungen 9 werden gereinigt oder gegen neue ausgewechselt. Gleiches gilt auch für die Pulverzuleitungen 10 zwischen dem Pulversammelbehälter 19 und der elektrostatischen Sprüheinrichtung 9. Da das überschüssige Pulver in dem Kabinenraum 2 kontinuierlich und sofort mit Hilfe der Filtereinrichtung 11 zurückgewonnen wird, kann die insgesamt in der Anlage 1 umlaufende Pulvermenge stark reduziert werden, so daß bei einem Farbwechsel der Pulverlust minimiert wird.

Aus der Seitenansicht nach Fig. 2, in der gleiche oder ähnliche Teile wie in Fig. 1 mit denselben Bezugszeichen versehen sind, ist auch noch eine Ausführungsvariante einer solchen Anlage 1 zur elektrostatischen Pulverbeschichtung gezeigt. Hierbei ist die Anlage 1 in zwei symmetrische Hälften 1a und 1b, bezogen auf die Längsrichtung der Anlage 1, unterteilt. Den beiden symmetrischen Hälften 1a, 1b ist ein gemeinsamer Pulversammelbehälter 19 mit einer entsprechenden Siebeinrichtung 20 zugeordnet. Die jeweiligen symmetrischen Hälften 1a, 1b sind beispielsweise, wie in Fig. 1 gezeigt, insbesondere hinsichtlich der Filtereinrichtung 11 übereinstimmend ausgelegt. Natürlich können für diese Hälften 1a, 1b auch die Ausbildungsformen der Filtereinrichtung 11 vorgesehen werden, die nachstehend noch anhand den Fig. 3a bis 3f erläutert werden. Mit Hilfe einer Teleskopschiebereinrichtung 30 wird das von den beiden in Fig. 2 vorgesehenen Abblaswalzen 18 abgeblasene Pulver in Richtung zu dem Pulversammelbehälter 19 bzw. dessen Siebeinrichtung 20 bzw. selbsttätig mit Hilfe eines geeigneten Gewebes im Schwebenverfahren in den Behälter 19 gefördert. Ansonsten stimmen die Einzelheiten der in Fig. 2 gezeigten Anlage 1 mit jener nach Fig. 1 überein.

Nachstehend werden anhand den Fig. 3a bis 3f mögliche Ausführungsvarianten der Filtereinrichtung 11 bei der erfindungsgemäßen Anlage 1 zur elektrostatischen Pulverbeschichtung erläutert. Hierbei sind die jeweiligen Ausbildungsformen der Filtereinrichtung 11 schematisch gezeigt, wobei aus Übersichtlichkeitsgründen nur der Verlauf des oder der Filterbänder verdeutlicht ist. Selbstverständlich umfaßt jede Ausbildungsform der Filtereinrichtung 11 und/oder der nachstehend noch näher erläuterten Filterteileinheiten auch einen wie in Fig. 1 gezeigten Luftkasten 12 zur Erzeugung eines Gebiets mit Unterdruck.

In Fig. 3a ist nochmals schematisch die Filtereinrichtung 11 von Fig. 1 beispielsweise wiedergegeben. In Fig. 3b ist eine mit 11b bezeichnete Filtereinrichtung gezeigt, die in vertikaler Richtung, d.h. in längsrichtung des Kabinenraums 2 gesehen, symmetrisch in zwei Filterteileinheiten 31, 32 unterteilt ist. Die Filterteileinheiten 31, 32 sind spiegelsymmetrisch angeordnet und zwischen diesen oder hinter diesen befindet sich der nicht näher dargestellte Pulverbehälter oder die Pulverbehälter (in Fig. 1 und 2 mit 19 bezeichnet).

Bei der in Fig. 3c mit 11c bezeichneten Ausbildungsform der Filtereinrichtung sind den jeweiligen Seitenwänden des Kabinenraums 2 gesonderte Filterteileinheiten 33, 34 zugeordnet. Der Bodenfläche des Kabinenraums 2 sind zwei weitere gesonderte Filterteileinheiten 35, 36 zugeordnet. Die Filterteileinheiten 33 und 34 sind hierbei jeweils übereinstimmend ausgebildet und die Filterteileinheiten 35, 36 stimmen ebenfalls hinsichtlich des Aufbaus miteinander überein. Zwischen den beiden dem Boden des Kabinenraums 2 zugeordneten Filterteileinheiten 35, 36 ist dann der nicht näher dargestellte Pulversammelbehälter angeordnet.

In Abweichung von Fig. 3c ist in Fig. 3d eine insgesamt mit 11d bezeichnete Filtereinrichtung derart ausgestaltet, daß anstelle der beiden in Fig. 3c mit 35 und 36 bezeichneten Filterteileinheiten eine gemeinsame Filterteileinheit 37 dem Boden des Kabinenraums 2 zugeordnet ist.

Fig. 3e bezieht sich auf eine Filtereinrichtung 11e, bei der der Deckenfläche des Kabinenraums 2 zwei gesonderte Filterteileinheiten 38, 39 zugeordnet sind. Die Filtereinrichtung für diese Wandflächen und/oder der Bodenwandfläche des Kabinenraums 2 können, wie bei den vorangehenden Ausbildungsformen erläutert, ausgebildet sein.

In Fig. 3f ist eine mit 11f bezeichnete Filtereinrichtung. gezeigt, bei der anstelle der Filterteileinheiten 38, 39 nach Fig. 3e in diesem Deckenflächenbereich lediglich Deckenwandteile vorgesehen sind, die beispielsweise mit Hilfe der in Fig. 1 gezeigten Blaseinrichtung 25 von anhaftendem Pulver befreit werden. Bei einer Einzelkabine (nicht Durchlauf) wird die Rückwand auch mit einer wie dargestellten Filtereinrichtung betrieben.

Selbstverständlich kann die Filtereinrichtung auch durch Kombinationen der vorangehend erläuterten Ausführungsbeispiele dargestellt werden.

Das Filterband 13 oder jede der Filterteileinheiten sind natürlich hinsichtlich der Luftdurchlässigkeit so auszulegen, daß man den gewünschten Abscheidegrad erreicht, der beispielsweise 99,7% betragen soll. In Abhängigkeit von den Eigenschaften dieses umlaufenden Filterbands 13 können gegebenenfalls noch leerlaufende Filterbandunterstützungswalzen und/ oder gegebenenfalls noch Filterbandspenneinrichtungen vorgesehen sein. Auch können natürlich in Anlehnung an Fig. 2 mehrere Längsteile hintereinander in Längsrichtung der Anlage angeordnet sein, so daß gleichzeitig Pulver in Pulver oder auch in zwei Farben beschichtet werden kann, wobei selbstverständlich für die Hälften 1a oder 1b (Fig. 2) getrennte Siebe 20 und Pulverbehälter 19 vorzusehen sind. Dazu sind die Kabinen (Fig. 2) 1a, 1b auseinanderfahrbar vorgesehen. Auch brauchen die hierbei vorgesehenen jeweiligen Teile hinsichtlich der Filtereinrichtung 11 nicht übereinstimmend ausgebildet zu sein, sondern hierbei können Teile mit unterschiedlichen Filtereinrichtungen nebeneinander gesetzt werden, wobei diese beispielsweise entsprechend den Ausbildungsformen nach den Fig. 3a bis 3f ausgebildet sein können.

Insbesondere wird eine Ausbildungsform einer solchen Anlage nach der Erfindung angegeben, bei der die Kabinenwände direkt von der Filtereinrichtung gebildet werden und die Anlage ein gerüstartiges Grundgestell hat, an dem dann die Filtereinrichtung und/oder die Filterteileinheiten verfahrbar gelagert sind. Der Effekt dabei ist, daß man die Seitenwände und/oder den Boden aus dem Grundgestell herausfahren und somit reinigen kann, und/oder gegen bereits vorgereinigte Einheiten austauschen kann und somit wird die Stillstandszeit, d.h. Feinreinigungszeit, beträchtlich verringert, evtl. notwendig bei Kontrastfarben (z.B. Schwarz/Weiß).

Das Feinreinigen der herausgenommenen Einheiten kann somit in einem separaten Reinigungsraum vorgenommen werden.

Gemäß einem weiteren wesentlichen Aspekt nach der Erfindung werden das oder die Filterbänder 13 der Filtereinrichtung 11 oder den Filtereinrichtungen der Filterteileinheiten 11b-11f während der Umlaufbewegung ständig gereinigt. Bei einem Farbwechsel beispielsweise können zur Feinreinigung der Filtereinrichtung 11 diese in einem gesonderten Raum oder einer Reinigungsstation endgereinigt werden (siehe oben), wobei die Filtereinrichtung oder die Filterteileinheiten dann mittels einer Hochleistungssaugdüse abgesaugt werden. Bei dieser Feinreinigung kommt somit im Gegensatz zu den bisher vorhandenen Anlagen keine Blasluft zur Anwendung, so daß sich das Pulver nicht in der Umgebung verteilen und aufgewirbelt werden kann. Hierdurch können Beeinträchtigungen anderer Pulverbeschichtungsanlagen oder -einrichtungen vermieden werden, die Arbeitsbedingungen lassen sich aufgrund der Staubarmut wesentlich verbessern, und es läßt sich ein höherer Qualitätsstandard bei der Pulverbeschichtung von Teilen erzielen, da durch Blasluft und hierdurch bedingte Aufwirbelungen von Pulver nicht zu Verunreinigungen bei der Pulverbeschichtung führen können. Es ist vorgesehen, bei stark haftenden Pulvern gleichzeitig von der belagfreien Seite mittels Zusatzluft an einer gegenüberliegenden Düse die Feinreinigung zu unterstützen.

Wenn man ein gerüstartiges Grundgestell für die Anlage hat, in dem die Filtereinrichtung und/oder die Filterteileinheiten verfahrbar sind, so kann das nach dem Herausnehmen und Herausfahren der Filtereinrichtung und/oder der Filterteileinheiten noch vorhandene gerüstartige Grundgestell oder Gerippe abschließend beispielsweise durch Abschaben der Metallteile des gerüstartigen Grundgestells und durch anschließendes Abrollen mittels einer Abrolleinrichtung gegebenenfalls unter Verwendung eines Haftmittels für die Pulverteilchen gereinigt werden, ohne daß Blasluft eingesetzt wird. Die Rolle der Abrolleinrichtung wird dann gegebenenfalls mit dem Haftmittel benetzt und sie kann austauschbar an einer entsprechenden Reinigungseinrichtung vorgesehen sein.

Somit benötigt man für die Feinreinigung der Gesamtanlage überhaupt keine Blasluft, so daß sich auch die hiermit bisher verbundenen Schwierigkeiten überwinden lassen.

## Patentansprüche

1. Anlage zur elektrostatischen Pulverbeschichtung mit einem Kabinenraum zur Aufnahme des Beschichtungsguts, in der wenigstens eine elektrostatische Sprüheinrichtung für den Pulverauftrag vorgesehen ist, mit einer Filtereinrichtung zur Pulverrückgewinnung, die antreibbare, endlose Filterbänder aufweist, die den Kabinenraum nach innen begrenzende Wände bilden, und die mittels Saugwirkung gereinigt werden, und mit einem Pulversammelbehälter für das rückgewonnene Pulver, dadurch **gekennzeichnet,** daß das oder die Filterbänder (13 ; 31, 32 ; 33, 34, 35, 36 ; 37 ; 38, 39) in einem Luftkasten (12) umlaufen, der die Kabinenaußenwand bildet und in dem Saugdruck herrscht, daß ein Zwischenraum (27) zwischen den Innenwandflächen (28) des Luftkastens (12) und dem Außentrum des Filterbandes vorgesehen ist, in dem eine Blaseinrichtung (25) zum Entfernen der an den Innenwandflächen (28) des Luftkastens (12) haften gebliebenen Pulverpartikel umläuft, und daß in einer unterdruckfreien Zone (16) eine von einer Abblaswalze (18) gebildete Abblaseinrichtung (17) angeordnet ist, welche von der Filterbandinnenseite her die auf der Filterbandaußenseite haftenden Pulverpartikel entfernt.

2. Anlage nach Anspruch 1, dadurch gekennzeichnet, daß der Pulversammelbehälter (19) der Abblaseinrichtung (17) gegenüberliegend angeordnet ist.

3 Anlage nach Anspruch 2, dadurch gekennzeichnet, daß der Pulversammelbehälter (19) unterhalb der Abblaseinrichtung (17) angeordnet ist.

4. Anlage nach einem der Ansprüche 1 bis 3, dadurch gekennzeichnet, daß in Umlaufrichtung des Filterbands (13 ; 31, 32 ; 33, 34, 35, 36 ; 37 ; 38, 39) gesehen vor der Abblaseinrichtung (17) eine elektrostatische Entladeeinrichtung (22) für die am Filterband haftenden, aufgeladenen Pulverteilchen angeordnet ist.

5. Anlage nach einem der vorangehenden Ansprüche, dadurch gekennzeichnet, daß die Blaseinrichtung (25) als Blasdüse (26) ausgebildet ist.

6. Anlage nach einem der vorangehenden Ansprüche, dadurch gekennzeichnet, daß der Kabinenraum (2) in zwei symmetrische Hälften (1a, 1b) unterteilt ist.

7. Anlage nach Anspruch 6, dadurch gekennzeichnet, daß jede Kabinenhälfte (1a, 1b) eine oder mehrere elektrostatische Sprüheinrichtung(en) (9) aufweist, die auf gegenüberliegenden Wandflächen (6, 7) der Kabine (2) angeordnet sind.

8. Anlage nach einem der vorangehenden Ansprüche, dadurch gekennzeichnet, daß die Filterbänder und der zugeordnete Luftkasten (12) der Filtereinrichtung (11) unter Bildung von Filterteileinheiten in vertikaler Richtung unterteilt ist.

9. Anlage nach Anspruch 8, dadurch gekennzeichnet, daß die Filterteileinheiten (31, 32) spiegelsymmetrisch ausbildet sind.

10. Anlage nach Anspruch 8, dadurch gekennzeichnet, daß für die Seitenwände des Kabinenraums (2) gesonderte Filterteileinheiten (33, 34) vorgesehen sind.

11. Anlage nach Anspruch 10, dadurch gekennzeichnet, daß der Bodenfläche und/oder der Rückwand des Kabinenraums (2) eine gemeinsame weitere Filterteileinheit (37) zugeordnet ist.

12. Anlage nach Anspruch 10 oder 11, dadurch gekennzeichnet, daß der Deckenfläche des Kabinenraums (2) eine gesonderte Filterteileinheit (38, 39) zugeordnet ist.

13. Anlage nach einem der vorangehenden Ansprüche, dadurch gekennzeichnet, daß die elektrostatische Pulverbeschichtungsanlage (1) ein Grundgestell aufweist, an dem die Filtereinrichtung (11) und/oder die Filterteileinheiten (31, 32, 33, 34, 35, 36, 37, 38, 39) verschieblich gelagert ist und/oder sind.

14. Anlage nach Anspruch 13, dadurch gekennzeichnet, daß die Filtereinrichtung (11) und/oder die Filterteileinheit(en) (31 bis 39) der Filtereinrichtung (11b bis 11f) zur gesonderten Feinreinigung aus dem Grundgestell herausfahrbar ist oder sind.


## Claims

1. Installation for electrostatic powder coating with a cabin compartment for holding the coating material, in which at least one electrostatic spray device for the powder application is provided, with a filter device for powder recovery, which has drivable, endless filter belts, which form limiting walls to the inside for the cabin compartment, and which are cleaned by suction action, and with a powder collecting container for the recovered powder, thereby **characterized** that the filter belt or belts (13 ; 31, 32 ; 33, 34, 35, 36 ; 37 ; 38, 39) revolve in an air box (12), which forms the exterior wall of the cabin and in which suction pressure prevails, that an intermediate space (27) between the interior wall surfaces (28) of the air box (12) and the exterior stringer of the filter belt is provided, in which a blower (25) rotates to remove powder particles that remain adhered to the interior wall surfaces (28) of the air box (12), and that an exhaust blower (17) formed by a blowoff roller (18) is arranged in a vacuum-free zone, which removes from inside the filter belt the powder particles adhering to the outside of the filter belt.

2. Installation according to Claim 1, thereby characterized that the powder collecting container (19) is arranged opposite the blowoff device (17).

3. Installation according to Claim 2, thereby characterized that the powder collecting container (19) is located below the blowoff device (17).

4. Installation according to one of the Claims 1 to 3, thereby characterized that an electrostatic discharging device (22) for the charged powder particles adhering to the filter belt is arranged in the rotating direction of the filter belt (13 ; 311, 32 ; 33, 34, 35, 36 ; 37 ; 38, 39) seen from in front of the blowoff device (17).

5. Installation according to one of the preceding claims, thereby characterized that the blower (25) is designed as blast nozzle (26).

6. Installation according one of the preceding claims thereby characterized that the cabin compartment (2) is divided into two symmetrical halves.

7. Installation according to Claim 6, thereby characterized that each cabin half (1a, 1b) has one or more electrostatic spray device(s) (9), which are arranged on opposite wall surfaces (6, 7) of the cabin (2).

8. Installation according to one of the preceding claims thereby characterized that the filter belts and the associated air box (12) of the filter device (11) are subdivided in vertical direction under formation of filter subunits.

9. Installation according to Claim 8, thereby characterized that the filter subunits (31, 32) are designed mirror symmetrically.

10. Installation according to Claim 8, thereby characterized that separate filter subunits (33, 34) are provided for the side walls of the cabin compartment (2).

11. Installation according to Claim 10, thereby characterized that a common additional filter subunit (37) is allocated to the floor surface and/or the rear wall of the cabin compartment.

12. Installation according to Claim 10 or 11, thereby characterized that a separate filter subunit (38, 39) is allocated to the ceiling surface of the cabin compartment (2).

13. Installation according to one of the preceding claims, thereby characterized that the electrostatic powder coating installation (1) has a base, on which the filter device (11) and/or the filter subunits (31, 32, 33, 34, 35, 36, 27, 38, 39) is or are slidingly supported.

14. Installation according to Claim 13, thereby characterized that the filter device (11) and/or filter subunit(s) (11b to 11f) can be moved out from the base for special fine cleaning.


**Revendications**

1. Installation pour le revêtement électro-statique par poudre, avec une salle de cabine pour recevoir les articles à revêtir, dans laquelle est prévue au moins un équipement électro-statique de pulvérisation pour l'application de la poudre, avec un équipement de filtre pour la récupération de la poudre, équipement comportant des bandes de filtre à commander et sans fin constituant des parois internes limitant la salle de cabine et qui sont nettoyées sous un effet d'aspiration, avec un réservoir collecteur pour la poudre regagnée, caractérisé en ce que la ou les bandes de filtre (13 ; 31, 32 ; 33, 34, 35, 36 ; 37 ; 38, 39) circulent dans un caisson à air (12) constituant la paroi externe de la cabine, caisson se trouvant sous une pression d'aspiration, avec un espace (27) entre les parois internes (28) du caisson à air (12) et l'équipement extérieur de la bande de filtre à l'intérieur duquel circule une soufflerie (25) pour enlever les particules de poudre se trouvant aux parois internes (28) et que dans une zone sans dépression (16) est situé un équipement de soufflerie (17) constitué par un cylindre de soufflerie (18), équipement de soufflerie servant à enlever côté extérieur de la bande filtre les particules de poudre se trouvant à cet endroit.

2. Installation selon la revendication 1, caractérisé en ce que le réservoir collecteur pour la poudre (19) se trouve vis-à-vis de l'équipement de soufflerie (17).

3. Installation selon la revendication 2, caractérisé en ce que le réservoir collecteur pour la poudre (19) se trouve en-dessous de l'équipement de soufflerie (17).

4. Installation selon la revendication 1 à 3, caractérisé en ce que, selon le sens de rotation de la bande de filtre (13 ; 31, 32 ; 33, 34, 35, 36 ; 37 ; 38, 39), vu de l'équipement de soufflerie (17), un équipement électrostatique de décharge (22) est aménagé pour les particules de poudre chargées et se trouvant sur la bande de filtre.

5. Installation selon une des revendications précitées, caractérisé en ce que l'équipement de soufflerie (25) est conçu sous forme d'un gicleur de soufflerie (26).

6. Installation selon une des revendications précitées, caractérisé en ce que la salle de cabine (2) est subdivisée en deux moitiés symétriques (1a, 1b).

7. Installation selon la revendication 6, caractérisé en ce que chaque moitié de cabine (1a, 1b) présente un ou plusieurs équipements électro-statiques de pulvérisation (9) situés sur des surfaces murales opposées (6, 7) de la cabine (2).

8. Installation selon une des revendications précitées, caractérisé en ce que les bandes de filtre et le caisson à air affecté (12) de l'équipement de filtre (11) sont subdivisés en sens vertical pour former des unités partielles de filtre.

9. Installation selon la revendication 8, caractérisé en ce que les unités partielles de filtre (31, 32) sont conçues de manière symétrique.

10. Installation selon la revendication 8, caractérisé en ce que des unités partielles particulières de filtre (33, 34) sont prévues pour les parois latérales de la salle de cabine (2).

11. Installation selon la revendication 10, caractérisé en ce qu'une autre unité partielle commune de filtre (37) est affectée à la surface de sol et/ou à la paroi arrière de la salle de cabine (2).

12. Installation selon la revendication 10 ou 11, caractérisé en ce qu'une unité partielle particulière de filtre (38, 39) est affectée à la surface de plafond de la salle de cabine (2).

13. Installation selon une des revendications précitées, caractérisé que ce que l'installation électro-statique de pulvérisation (1) présente un bâti de base sur lequel se trouve(nt) supporté(s) de manière déplaçable l'équipement de filtre (11) et/ou les unités partielles de filtre (31, 32, 33, 34, 35, 36, 37, 38, 39).

14. Installation selon la revendication 13, caractérisé en ce que l'équipement de filtre (11) et/ou les unités partielle(s) de filtre (31 à 39) de l'équipement de filtre (11b à 11f) est ou sont déplaçable(s) du bâti de base pour effectuer un nettoyage fin particulier.

FIG. 2

FIG. 1

# FIG. 3